Europäisches Patentamt

European Patent Office

Office européen des brevets

(11) Veröffentlichungsnummer: **0 643 496 A1**

## (12) EUROPÄISCHE PATENTANMELDUNG

(21) Anmeldenummer: **94113558.4**

(22) Anmeldetag: **30.08.94**

(51) Int. Cl.6: **H04B 10/158**

(30) Priorität: **10.09.93 DE 4330748**

(43) Veröffentlichungstag der Anmeldung:
**15.03.95 Patentblatt 95/11**

(84) Benannte Vertragsstaaten:
**BE CH DE FR GB IT LI**

(71) Anmelder: **SIEMENS AKTIENGESELLSCHAFT**
**Wittelsbacherplatz 2**
**D-80333 München (DE)**

(72) Erfinder: **Härle, Hans-Georg**
**Haldeweg 4**
**D-86391 Stadtbergen (DE)**
Erfinder: **Thanhäuser, Gerhard**
**Luisenstrasse 17**
**D-86415 Mering (DE)**

(54) **Optischer Empfänger mit grosssignalfestem Transimpedanzverstärker.**

(57) Im Hinblick auf einen großen Bereich der Eingangsdynamik eines optischen Empfängers wird eine Schottkydiode dem Eingang eines als Fotostromverstärker verwendeten Transimpedanzverstärkers parallel geschaltet. Bei entsprechender Bemessung ist die Schottkydiode bei kleinen Eingangslichtleistungen gesperrt und erzeugt damit praktisch keinen Rauschstrom, während bei großen Eingangslichtleistungen die Schottkydiode nahezu den vollständigen Fotostrom übernimmt. Der Transimpedanzverstärker kann mit bipolaren Transistoren und auch mit einem Feldeffekttransistor vom HEMT-Typ als Sourcefolger aufgebaut werden.

FIG 1

EP 0 643 496 A1

Die Erfindung betrifft einen optischen Empfänger entsprechend dem Oberbegriff des Anspruchs 1.

Für den Empfang optischer Binärsignale wird häufig ein optischer Empfänger verwendet, der einen Transimpedanzverstärker enthalt, da dieses Konzept eine sehr breitbandige Übertragung bis zu tiefen Frequenzen gewahrleistet und damit den Eigenschaften der üblicherweise verwendeten Binärcodes bezuglich der Spektralleistungsdichte Rechnung trägt. Optische Empfänger mit Transimpedanzverstärker sind aus G. Grau, W. Freude "Optische Nachrichtentechnik" 3. Auflage, Springer Verlag Berlin 1991; Seite 349 bekannt. Transimpedanzverstärker als Breitbandverstärker sind außerdem bei U. Tietze, Ch. Schenk "Halbleiterschaltungstechnik" 9. Auflage, Springer Verlag Berlin 1989; Seiten 504 - 508 ausführlich beschrieben.

Ein Transimpedanzverstärker ist in einfacher Weise dadurch realisierbar, daß ausgehend von einem Operationsverstärker dessen Ausgang über einen sogenannten Transimpedanzwiderstand mit dem invertierenden Eingang verbunden wird, wobei sich durch diese Gegenkopplung eine große Verstärkungsbandbreite und ein niedriger Eingangswiderstand am invertierenden Eingang ergibt.

Fur den Einsatz in optischen Empfängern sind die Rauscheigenschaften des Transimpedanzverstärkers von Bedeutung, wobei neben dem Rauschen des eigentlichen Verstärkers der Rauschbeitrag des Transimpedanzwiderstandes von wesentlicher Bedeutung ist. Aus diesem Grund wird üblicherweise versucht, den Transimpedanzwiderstand möglichst groß zu machen, da sich dadurch ein kleiner Rauschstrom am Verstärkereingang ergibt, das Verhältnis dieses Rauschstroms zu dem vom fotoelektrischen Wandler stammenden Signalstrom bestimmt dabei die minimal notwendige optische Empfangsleistung.

Bei derartig aufgebauten optischen Empfängern ergibt sich nun das Problem, daß der hohe Transimpedanzwiderstand eine hohe Verstarkung und damit eine hohe Aussteuerung des verwendeten Verstärkers ergibt, was zu einer Einschrankung der Großsignalfestigkeit fuhrt. Üblicherweise wird dieses Problem dadurch umgangen, daß bei optischen Empfängern mit optimaler Empfindlichkeit beim Einsatz in kurzen Übertragungsstrecken dem Empfängereingang zusätzliche optische Dämpfungsglieder vorgeschaltet werden.

Die Aufgabe der Erfindung besteht also darin, einen optischen Empfänger der eingangs erwähnten Art zu schaffen, der bei guten Großsignaleigenschaften geringe Rauschströme erzeugt und dadurch auch bei minimalen optischen Empfangsleistungen verwendbar ist.

Erfindungsgemäß wird die Aufgabe dadurch gelost, daß der eingangs erwähnte optische Empfänger durch die im Kennzeichen des Patentanspruchs 1 angegebenen Merkmale weitergebildet ist. Ein besonderer Vorteil bei der erfindungsgemäßen Lösung liegt dabei darin, daß bei kleinen Empfangslichtleistungen durch die angewandte Schaltungstechnik der Rauschbeitrag der im Hinblick auf die Großsignaleigenschaften zusätzlich verwendeten Schottkydiode ausgeschlossen werden kann; die in den Patentansprüchen 2 und 3 beschriebenen speziellen Ausbildungen des erfindungsgemäßen optischen Empfängers weisen außerdem eine vorteilhaft geringe Stromaufnahme auf. In den Patentansprüchen 4 bis 6 sind bevorzugte Weiterbildungen des erfindungsgemäßen optischen Empfängers beschrieben.

Die Erfindung soll im Folgenden anhand zweier in der Zeichnung dargestellter Ausführungsbeispiele näher erläutert werden. Dabei zeigt:

Figur 1 einen erfindungsgemäßen optischen Empfänger, der ausschließlich mit bipolaren Transistoren aufgebaut ist und

Figur 2 ein erfindungsgemäßer optischer Empfänger mit einem Sourcefolger als Eingangsstufe des Transimpedanzverstärkers.

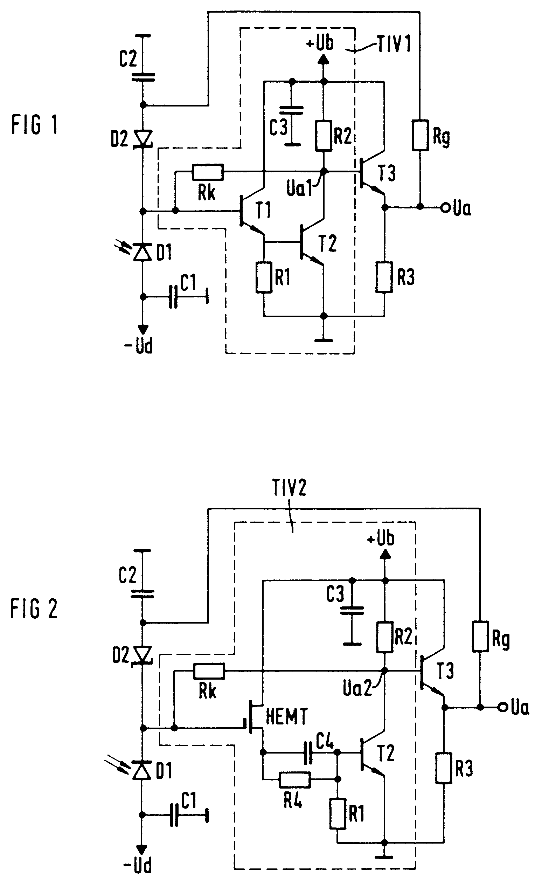

Der in der Figur 1 dargestellte optische Empfänger enthält eine Fotodiode D1 als fotoelektrischen Wandler, an die die optischen Eingangssignale angekoppelt werden. Ein erster Anschluß der Fotodiode D1 ist über einen ersten Kondensator C1 mit Bezugspotential und außerdem direkt mit einer Vorspannungsquelle -Ud für die Diodenvorspannung verbunden. Ein zweiter Anschluß der Fotodiode D1 ist mit dem Eingangsanschluß` eines ersten Transimpedanzverstärkers TIV1 sowie mit dem einen Anschluß einer Schottkydiode D2 verbunden, deren anderer Anschluß über einen zweiten Kondensator C2 mit Bezugspotential und außerdem über einen Gegenkopplungswiderstand Rg mit dem Ausgang Ua des optischen Empfängers verbunden ist.

Der erste Transimpedanzverstärker TIV1 enthalt die Reihenschaltung eines ersten und eines zweiten bipolaren Transistors T1, T2, wobei der Basisanschluß des ersten Transistors T1 mit dem Eingangsanschluß des ersten Transimpedanzverstärkers TIV1, also mit dem Verbindungspunkt der Fotodiode D1 und der Schottkydiode D2 verbunden ist. Der Kollektoranschluß des ersten Transistors T1 ist mit einer Betriebsspannungsquelle Ub sowie aber einen dritten Kondensator C3 mit Bezugspotential verbunden. Der Emitteranschluß des ersten Transistors T1 ist mit dem Basisanschluß des zweiten Transistors T2 sowie über einen ersten Widerstand R1 mit Bezugspotential verbunden. Der Emitteranschluß des zweiten Transistors T2 ist direkt an Bezugspotential angeschlossen, der Kollektoranschluß dieses Transistors stellt den Ausgangsanschluß Ua1 des ersten Transimpedanzverstärkers TIV1 dar, er ist außerdem über einen zweiten Widerstand R2 mit der Betriebsspannungsquelle Ub sowie über einen Transimpedanzwiderstand Rk mit dem Basisanschluß des ersten Transistors T1 verbunden.

Zur Impedanzanpassung ist dem ersten Transimpedanzverstärker TIV1 ein Emitterfolger nachgeschaltet, der aus einem dritten Transistor T3 und einem dritten Widerstand R3 besteht. Der Basisanschluß des dritten Transistors T3 ist mit dem Ausgangsanschluß Ua1 des ersten Transimpedanzverstärkers TIV1 verbunden, der Kollektoranschluß dieses Transistors ist an die Betriebsspannungsquelle +Ub angeschlossen, wahrend der Emitteranschluß dieses Transistors mit dem Ausgangsanschluß Ua des optischen Empfängers sowie über den dritten Widerstand R3 mit Bezugspotential verbunden ist.

Zur Erlauterung der Wirkungsweise sei zunächst das Verhalten bei kleinen optischen Eingangslichtleistungen betrachtet. In diesem Fall ist der Strom durch die Fotodiode D1 so klein, daß der zugehörige Spannungsabfall am Transimpedanzwiderstand Rk im Millivoltbereich liegt. Der entsprechende Gleichstromarbeitspunkt des dritten Transistors T3 ist dabei so eingestellt, daß die Emitterspannung dieses Transistors etwa um eine Diodenschwellenspannung unter der Basisvorspannung des ersten Transistors T1 liegt. Durch die Verbindung über den Gegenkopplungswiderstand Rg ist die Schottkydiode D2 in diesem Betriebsfall in Sperrichtung gepolt und erzeugt dabei keinen Rauschstrom, so daß damit der Rauschbeitrag der Schottkydiode vernachlässigbar ist. Mit steigender Eingangslichtleistung nimmt in gleichem Maße der Spannungsabfall am Transimpedanzwiderstand Rk zu. Diese Spannung beinhaltet einen Gleichwert entsprechend der gemittelten optischen Leistung und eine Wechselspannungsamplitude. Überschreitet der Gleichwert einen Betrag von etwa 1 Volt entsprechend einer Basis-Emitter-Schwellenspannung eines Transistors zuzuglich einer Schwellenspannung der Schottkydiode, dann wird die Schottkydiode D2 leitend und bewirkt bei weiter steigenden Eingangslichtleistungen eine Signalspannungsbegrenzung. In diesem Fall steuert also der Gleichstrommittelwert des Fotostroms der Fotodiode D1 den Bahnwiderstand der Schottkydiode D2. Der Widerstandswert des Gegenkopplungswiderstandes Rg ist nun sehr viel kleiner gewählt als der des Transimpedanzwiderstandes Rk. Beim Ausführungsbeispiel ist beispielsweise der Widerstandswert des Transimpedanzwiderstandes Rk etwa 20mal größer als der des Gegenkopplungswiderstandes Rg. Mit steigender Eingangslichtleistung wird dadurch eine fast vollständige Übernahme des Gleichstrommittelwertes des Fotostroms durch die Schottkydiode D2 erreicht, die Wahl des Arbeitspunktes des ersten Transimpedanzverstärkers TIV1 im reinen A-Betrieb stellt sicher, daß der restliche Fotostrom den Transimpedanzverstärker TIV1 nicht übersteuert. Damit ergibt sich, daß der optische Empfänger nach Figur 1 aufgrund des unterdruckten Rauschstroms der Schottkydiode D2 bei kleinen Eingangslichtleistungen eine hohe Empfindlichkeit aufweist und durch die Parallelschaltung von Schottkydiode mit Gegenkopplungswiderstand zum Eingang des Transimpedanzverstärkers wird bei großen Eingangslichtleistungen sichergestellt, daß der Transimpedanzverstärker nicht übersteuert wird.

Der in Figur 2 dargestellte optische Empfänger gleicht in seinem Aufbau bis auf den Transimpedanzverstärker dem Aufbau des Empfängers nach Figur 1. Der in diesem Falle verwendete zweite Transimpedanzverstärker TIV2 enthalt als Eingangsstufe einen als Sourcefolger geschalteten Feldeffekttransistor vom HEMT-Typ, der den ersten Transistor T1 der Schaltung nach Figur 1 ersetzt. Der Gate-Anschluß des Feldeffekttransistors HEMT ist mit dem Eingangsanschluß des zweiten Transimpedanzverstärkers sowie über den Transimpedanzwiderstand Rk mit dem Ausgangsanschluß Ua2 des zweiten Transimpedanzverstärkers TIV2 verbunden. Der Drain-Anschluß diese Transistors ist analog der Schaltung nach Figur 1 über den dritten Kondensator C3 mit Bezugspotential sowie mit dem Betriebspannungsanschluß Ub verbunden, der Sourceanschluß des Feldeffekttransistors HEMT ist über die Parallelschaltung aus einem vierten Widerstand R4 und einem vierten Kondensator C4 mit dem Basisanschluß des zweiten Transistors T2 verbunden. Der Emitteranschluß dieses Transistors ist außerdem direkt und der Basisanschluß über den ersten Widerstand R1 mit Bezugspotential verbunden, der Kollektoranschluß dieses Transistors stellt den Ausgangsanschluß Ua2 des zweiten Transimpedanzverstärkers dar, der außerdem über den zweiten Widerstand R2 an die Betriebsspannungsquelle +Ub angeschlossen ist. Mit dem Ausgangsanschluß Ua2 ist wie bei der Schaltung nach der Figur 1 ein Emitterfolger als Endstufe des optischen Empfängers verbunden. Die Wirkungsweise der Schaltung nach der Figur 2 entspricht der nach der Figur 1, im Hinblick auf das außerordentlich gute Rauschverhalten des Feldeffekttransistors vom HEMT-Typ ist die erreichbare Empfindlichkeit noch hoher als die des Empfängers nach der Figur 1. Der wegen der Gate-Source-Vorspannung des Feldeffekttransistors erforderliche vierte Widerstand R4 ist beim Ausführungsbeispiel so dimensioniert, daß bei kleinen optischen Eingangsleistungen das Emitterpotential des Endstufentransistors T3 ebenfalls eine Schwellenspannung über dem Massepotential liegt, um die Funktion der Gegenkopplung Ober den Gegenkopplungswiderstand Rg und die Schottkydiode D2 und damit die Steuerung deren Bahnwiderstandes sicherzustellen.

**Patentansprüche**

1. Optischer Empfänger mit wenigstens einem fotoelektrischen Wandler zur Erzeugung eines Fotostroms aus einer Eingangslichtleistung und mit einem nachgeschalteten Transimpedanzverstärker,
**dadurch gekennzeichnet,**
daß ein gemeinsamer Verbindungspunkt des fotoelektrischen Wandlers D1 und des Eingangs des nachgeschalteten Transimpedanzverstärkers (TIV) über eine Reihenschaltung aus einer für den Fotostrom bei vergleichsweise kleinen Eingangslichtleistungen gesperrten und bei vergleichsweisen großen Eingangslichtleistungen in Durchlaßrichtung gepolten Schottkydiode (D2) und einem Gegenkopplungswiderstand (Rg) mit dem Ausgang (Ua) des optischen Empfängers verbunden ist.

2. Optischer Empfänger nach Anspruch 1,
**dadurch gekennzeichnet,**
daß der Transimpedanzverstärker (TIV1) einen ersten Transistor (T1) enthält, dessen Basisanschluß über den Verbindungspunkt mit dem fotoelektrischen Wandler (D1) sowie mit dem einen Anschluß des Transimpedanzwiderstandes (Rk) verbunden ist, daß der Kollektoranschluß des ersten Transistors (T1) mit dem Betriebsspannungsanschluß (+Ub) und der Emitteranschluß über einen Widerstand (R1) mit Bezugspotential und außerdem mit dem Basisanschluß eines zweiten Transistors (T2) verbunden ist, dessen Emitteranschluß mit Bezugspotential und dessen Kollektoranschluß über einen zweiten Widerstand (R2) mit der Betriebsspannung (+Ub), mit dem weiteren Anschluß des Transimpedanzwiderstandes (Rk) verbunden ist und außerdem den Ausgangsanschluß (Ua1) des Transimpedanzverstärkers darstellt.

3. Optischer Empfänger nach Anspruch 1,
**dadurch gekennzeichnet,**
daß der Transimpedanzverstärker (TIV2) einen als Sourcefolger geschalteten Feldeffekttransistor (HEMT) enthält, dessen Gate-Anschluß über den Verbindungspunkt mit dem fotoelektrischen Wandler (D1) sowie mit dem einen Anschluß des Transimpedanzwiderstandes (Rk) verbunden ist, daß der Drain-Anschluß des Feldeffekttransistors mit Bezugsspannung (+Ub) verbunden ist, daß der Source-Anschluß dieses Transistors über die Parallelschaltung eines vierten Widerstandes (R4) und eines vierten Kondensators (C4) mit dem Basisanschluß des zweiten Transistors (T2) verbunden ist, daß der Emitteranschluß dieses Transistors (T2) direkt mit Bezugspotential und der Basisanschluß über einen ersten Widerstand (R1) mit Bezugspotential verbunden ist und daß der Kollektoranschluß des Transistors mit dem zweiten Anschluß des Transimpedanzwiderstandes (Rk) sowie über den zweiten Widerstand (R2) mit Bezugspotential (+Ub) sowie mit einem Ausgangsanschluß (Ua1) des Transimpedanzverstärkers (TIV) verbunden ist.

4. Optischer Empfänger nach den Ansprüchen 1 bis 3,
**dadurch gekennzeichnet,**
daß dem Transimpedanzverstärker (TIV) ein mittels eines dritten Transistors (T3) aufgebauter Emitterfolger nachgeschaltet ist und dabei der Basisanschluß des dritten Transistors (T3) mit dem Ausgangsanschluß (Ua1) des Transimpedanzverstärkers (TIV) verbunden ist, daß der Kollektoranschluß des dritten Transistors direkt mit dem Betriebsspannungsanschluß (+Ub) verbunden ist, daß der Emitteranschluß dieses Transistors (T3) über einen dritten Widerstand (R3) mit Bezugspotential, mit dem Ausgangsanschluß (Ua2) des optischen Empfängers sowie mit dem Gegenkopplungswiderstand (Rg) verbunden ist.

5. Optischer Empfänger nach den Ansprüchen 1 bis 4,
**dadurch gekennzeichnet,**
daß der Widerstandswert des Gegenkopplungswiderstandes (Rg) sehr viel kleiner als der des Transimpedanzwiderstandes (Rk) ist.

6. Optischer Empfänger nach Anspruch 5,
**dadurch gekennzeichnet,**
daß der Widerstandswert des Gegenkopplungswiderstandes (Rg) etwa $\frac{1}{20}$ tel des Transimpedanzwiderstandes (Rk) beträgt.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | TRANSACTIONS OF THE INSTITUTE OF ELECTRONICS, INFORMATION AND COMMUNICATION ENGINEERS OF JAPAN, Bd.E74, Nr.5, Mai 1991, TOKYO JP Seiten 1343 - 1344 KARITA ET AL 'A wide dynamic range optical receiver for biotelemetry system' * Seite 1343, rechte Spalte, Zeile 10 - Seite 1344, linke Spalte, Zeile 9; Abbildung 1 * --- | 1,2,5,6 | H04B10/158 |
| A | EP-A-0 129 305 (STC) * Seite 4, Zeile 10 - Zeile 34; Abbildung 1 * --- | 1,5,6 | |
| A | PATENT ABSTRACTS OF JAPAN vol. 15, no. 187 (E-1067) 1991 & JP-A-03 048 522 (HITACHI) * Zusammenfassung * --- | 1,2,4 | |
| A | TELECOMMUNICATIONS AND RADIO ENGINEERING, Bd.41/42, Nr.4, April 1987, WASHINGTON US Seiten 130 - 132 SHIMOV 'A high sensitivity photoamplifier' * Abbildung 4 * ----- | 3 | **RECHERCHIERTE SACHGEBIETE (Int.Cl.6)** H04B |

Der vorliegende Recherchenbericht wurde für alle Patentansprüche erstellt

| Recherchenort | Abschlußdatum der Recherche | Prüfer |
|---|---|---|
| DEN HAAG | 11. November 1994 | Williams, M.I. |

EPO FORM 1503 03.82 (P04C03)